# EUROPEAN PATENT APPLICATION

(11) **EP 2 562 984 A1**
(43) Date of publication of application: **27.02.2013**
(21) Application number: 11853831.3
(22) Date of filing: 18.08.2011
(51) Int. Cl.: H04L 29/06

(54) **METHOD AND DEVICE FOR PROCESSING DESKTOP SHARING**

(30) Priority: 31.12.2010 CN 201010624624
(71) Applicant: Huawei Technologies Co., Ltd., Shenzhen, Guangdong 518129 (CN)
(72) Inventor: JIANG, Lingli, Shenzhen Guangdong 518129 (CN)
(74) Representative: Isarpatent
(86) International application number: PCT/CN2011/078569
(87) International publication number: WO 2012/088899

(57) **Abstract**

An embodiment of the present invention provides a method for desktop sharing processing, comprising: receiving a sharing maintenance instruction; acquiring contents in a currently shared region according to said sharing maintenance instruction, and storing the contents, in order to provide the stored contents to other clients as shared contents. An embodiment of the present invention also provides a device for desktop sharing processing, comprising: a receiving module, configured to receive a sharing maintenance instruction; an acquiring module, configured to acquire contents in a currently shared region according to said sharing maintenance instruction; a storage module, configured to store the contents acquired by said acquiring module; a processing module, configured to provide the contents stored in said storage module to other clients as shared contents. With the present application, a sharing host is able to provide shared contents to participants constantly without being affected by the operations such as switching between windows during the conference sharing.

## Description

### CROSS REFERENCE TO RELATED APPLICATIONS

The present application claims the priority of the Chinese patent application No. 201010624624.2 filed to the Chinese Patent Office on December 31, 2010, entitled "METHOD AND DEVICE FOR DESKTOP SHARING PROCESSING", the disclosure of which is incorporated herein by reference in its entirety.

### FIELD OF THE INVENTION

The present invention relates to the technical field of communication, and particularly relates to a method and device for desktop sharing processing.

### BACKGROUND ART

At present, the conference system can provide a function of desktop sharing, i.e., a client of a desktop sharing host is able to collect the information of the client screen in real time, and send the information of the client screen to clients of other participants through a server. Herein, the function of desktop sharing may include functions of sharing the entire screen, sharing certain specified application, and sharing a specified region of the screen contents, etc.

Specifically, the function of sharing the entire screen is that the client of the sharing host collects the information of the entire desktop for the client in real time, and then sends the information of the entire desktop to the clients of other participants through a server, thereby enabling the other participants, through their clients, to see any operations conducted on the client of the sharing host. The function of sharing certain specified application is that the client of the sharing host collects the contents in a specified application window in real time, and sends the contents in the specified application window to the clients of other participants through a server, thereby enabling the other participants, through their clients, to see the contents in the application window only specified by the sharing host. The function of sharing a specified region of the screen contents is that the client of the sharing host collects the information displayed in a pre-bounded region on the desktop of the client in real time, and sends the information in the specified region to the clients of other participants through a server, thereby enabling the other participants, through their clients, to see the information displayed in the region only specified by the sharing host, while other information outside the specified region cannot be seen.

In the prior art, if the sharing host is to apply other operations, such as switching between windows, on his client during a conference sharing, the shared contents might be overlapped, thereby causing other participants not to be able to see the shared contents. This in turn limits the sharing host from performing operations like switching between windows.

### SUMMARY OF THE INVENTION

Embodiments of the present invention provide a method and device for desktop sharing processing, which enables a sharing host to provide participants with contents for sharing constantly without being affected by the operations such as switching between windows.

An embodiment of the present invention provides a method for desktop sharing processing, comprising:
receiving a sharing maintenance instruction;
acquiring contents in a currently shared region according to said sharing maintenance instruction, and storing the contents, in order to provide the stored contents to other clients as shared contents.

An embodiment of the present invention also provides a device for desktop sharing processing, comprising:
a receiving module for receiving a sharing maintenance instruction;
an acquiring module for acquiring contents in a currently shared region according to said sharing maintenance instruction;
a storage module for storing the contents acquired by said acquiring module;
a processing module for providing the contents stored in said storage module to other clients as shared contents.

The method and device for desktop sharing processing of the embodiments of the present invention realize that a sharing host is able to provide shared contents to participants constantly without being affected by the operations such as switching between windows during the conference sharing, through receiving a sharing maintenance instruction, and acquiring contents in a currently shared region according to the sharing maintenance instruction, and storing the contents, and finally providing the stored contents to other clients as shared contents.

### BRIEF DESCRIPTION OF THE DRAWINGS

In order to clearly illustrate the technical solutions in the embodiments of the present application or prior art, the accompanying drawings, which will be necessarily used in the description of the embodiments or prior art, will be explained. It is apparent for those skills in the art that the figures described below, from which some other figures can also be derived without any creative practice, are merely some embodiments of the present invention.
FIG. 1 is a flowchart of a method for desktop sharing processing method according to one embodiment of the present invention;
FIG. 2 is a flowchart of a method for desktop sharing processing method according to another embodiment of the present invention;
FIG. 3 is a flowchart of a method for desktop sharing processing method according to still another embodiment of the present invention;
FIG. 4 is a structural diagram of a device for desktop sharing processing according to one embodiment of the present invention;
FIG. 5 is a structural diagram of another device for desktop sharing processing according to one embodiment of the present invention.

### DETAILED DESCRIPTION OF THE EMBODIMENTS

Hereinafter, the technical solutions of the embodiments in the present invention will be clearly and fully described in combination with the drawings of the embodiments of the present invention, in order to improve clarify the purposes, technical solutions and advantages of the embodiments of the present invention. It is apparent that the embodiments described herein are merely parts, but not all, of the possible embodiments of the present invention. All the other embodiments, which are derived by those skills in the art based on the embodiments of the present invention without any creative practice, will fall within the protection scope of the present invention.

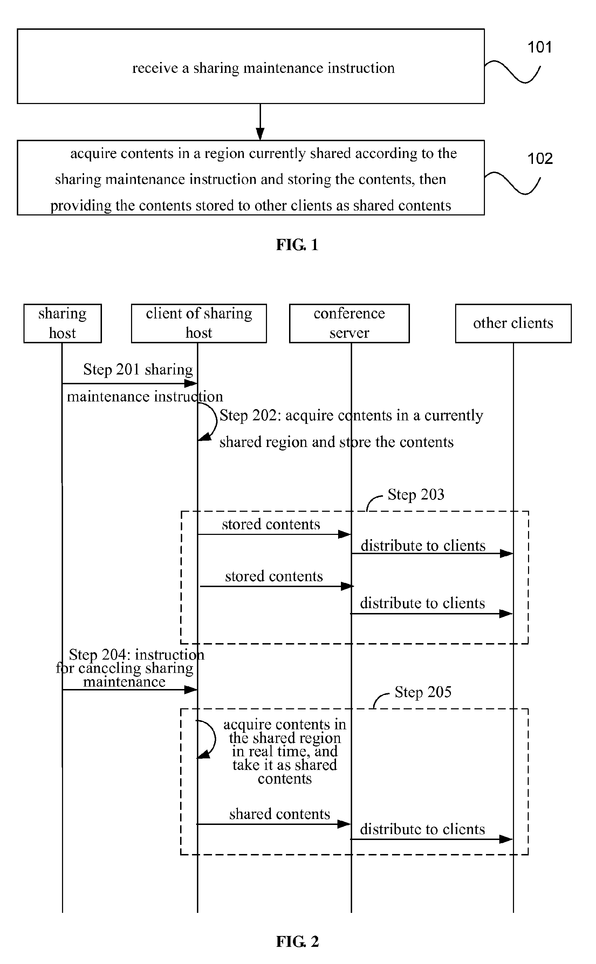

FIG. 1 is a flowchart of a method for desktop sharing processing method according to one embodiment of the present invention. As shown in FIG 1, the method of this embodiment comprises the following steps.

Step 101, receive a sharing maintenance instruction.

Step 102, acquire, according to the sharing maintenance instruction, contents in a currently shared region, and then the contents will be stored in order to provide the stored contents to other clients as shared contents.

In this embodiment, the shared contents of a conference can be displayed in real time on an screen of the client for a sharing host during the sharing process of the conference. Specifically, the shared contents may be the entire screen of the client for a sharing host, and also may be the displayed contents in a specified application window on the screen of the client for a sharing host, or the contents displayed in a pre-bounded region on the screen of the client for a sharing host. The client for a sharing host can collect the shared contents displayed on the screen of the client for a sharing host at a predetermined time interval, and send the shared contents to clients of other participants through a conference server. In this embodiment, the client for a sharing host can be embodied as a hardware terminal, e.g., a computer, a mobile terminal or a conference terminal; the terminal can also be embodied as a software terminal, e.g., a conference client installed on a computer or a mobile terminal. Other clients are the clients of the other participants in the sharing process of a conference, and the clients of other participants can also be embodied as hardware or software terminals.

In this embodiment, after storing the acquired contents included in the currently shared region, the stored contents can be taken as shared contents when it is necessary to send the shared contents. In this embodiment, a mechanism for sending the shared contents is to send at a predetermined time interval, so the time for sending the shared contents may be the time whenever it reaches the predetermined time interval.

In this embodiment, it is realized that a sharing host is able to provide shared contents to participants constantly without being affected by the other operations irrelevant to the conference (such as switching between windows) performed in the shared region by the sharing host during the sharing process of the conference, through receiving a sharing maintenance instruction, and acquiring contents in a currently shared region according to the sharing maintenance instruction, and storing the contents, and finally providing the stored contents to other clients as shared contents.

The sharing host is able to cancel the sharing maintenance operation when it does not need to conduct other operations irrelevant to the conference. Specifically, the method in this embodiment of the present invention may further comprise: receiving an instruction for canceling sharing maintenance; acquiring contents in the shared region in real time after receiving the instruction for canceling sharing maintenance, and providing the contents acquired in real time to other clients as shared contents. In order to save the space for storage, after receiving the instruction for canceling sharing maintenance, the contents had stored when the sharing maintenance instruction is received can further be deleted.

The scheme of this embodiment of the present invention can be embodied at either a client of a sharing host or a conference server. The schemes embodied at the client of the sharing host and the conference server will be further illustrated respectively as below.

FIG. 2 is of a method for desktop sharing processing method according to another embodiment of the present invention. In this embodiment, the technical solution of this embodiment is described in detail by taking the device for desktop sharing processing as a client of a sharing host for example. As shown in FIG. 2, the method of this embodiment comprises the following steps.

Step 201, a client of a sharing host receives a sharing maintenance instruction input by a sharing host.

Specifically, the client of the sharing host can provide a user operation interface for a user, and achieve the operation for interacting with the user through the user operation interface. In this embodiment, the client of the sharing host can receive a sharing maintenance instruction input by the sharing host through the user operation interface, wherein the user operation interface can be displayed to the user in a form of button, etc.

Step 202, the client of the sharing host acquires contents in a currently shared region according to the sharing maintenance instruction, and then stores the contents.

Specifically, during a sharing process of the conference, the client of the sharing host is able to acquire contents in the shared region in real time so as to share with other clients. In this embodiment, acquiring in real time can be implemented at a predetermined time intervals or acquiring whenever the contents in the shared region happen to change.

Upon the client of the sharing host receives the sharing maintenance instruction, the operation of acquiring contents in the shared region in real time is stopped, and only the contents in a currently shared region are acquired and stored. The stored contents are provided for other clients as shared contents during the subsequent processes for sharing (refer to step 203 for details). In this embodiment, the term "currently" used herein refers to the moment when the client of the sharing host receives the sharing maintenance instruction.

Step 203, when it is necessary to send shared contents, the client of the sharing host sends the stored contents to a conference server by which the stored contents can be distributed to other clients.

Specifically, when it is necessary to send shared contents, the client of the sharing host will send the stored contents to a conference server (i.e., regarding the stored contents as shared contents) instead of acquiring the contents in the shared region. The conference server will distribute the contents received from the client of the sharing host to other participant clients. In this embodiment, the mechanism of sending the shared contents shown in FIG. 2 is to send at a predetermined time interval, i.e., the client of the sharing host sends the stored contents to the conference server at predetermined time intervals during the subsequent process for sharing.

In this embodiment, when it is necessary to perform other operations on the client of the sharing host without interrupting the participants watching the contents, the sharing host can send the sharing maintenance instruction. The client of the sharing host acquires the contents in the currently shared region according to the received sharing maintenance instruction, and after the contents has been stored, stops acquiring the contents in the shared region. While it is necessary to send the shared contents, the stored contents are sent to the conference server as shared contents. The conference server distributes the shared contents to the clients of other participants after receiving the stored contents, thereby reducing the influence on the sharing of the conference by other operations irrelevant to the conference.

For example, in the course of a conference, when the client of the sharing host displays the conference contents through the entire screen, if the sharing host want to send an urgent email through the client of the sharing host, the client of the sharing host receives the sharing maintenance instruction input by the sharing host through the user operation interface, and acquires the conference contents displayed in the current entire screen according to the sharing maintenance instruction, and then stores the conference contents, in order to avoid the problem that other participants are unable to see the shared contents and in turn the conference is affected due to overlapping the conference contents by opening a mail box. The conference contents are sent to the conference server as shared contents at a predetermined time interval. Then, the conference server distributes the shared contents to other clients. Thus, it may achieve an effect that the sharing host can handle with other works without interrupting other participants watching the conference contents in the course of a conference.

Further, when it is not necessary conduct other operations irrelevant to the conference, the sharing host may cancel the sharing maintenance instruction. Thus, the embodiment shown in FIG. 2 further comprises the following steps.

Step 204, the client of the sharing host receives an instruction for canceling sharing maintenance;

Similarly, the client of the sharing host receives an instruction for canceling sharing maintenance through providing the user operation interface to the user, of which the specific implementation is similar to that of receiving the sharing maintenance instruction, and the description thereof will be omitted herein.

Step 205, after receiving the instruction for canceling sharing maintenance, the client of the sharing host acquires the contents in the shared region in real time, and provides the contents acquired in real time to other clients as shared contents.

After receiving the instruction for canceling sharing maintenance, the client of the sharing host stops the function of sharing maintenance, i.e., during the following processes for sharing, the client of the sharing host acquires the contents in the shared region in real time, and sends the contents acquired in real time to the conference server (i.e., taking the contents acquired in real time as shared contents) which provides the acquired contents to the clients of other participants. In this embodiment, the expression "real time" used herein may a predetermined time interval or the time when the contents in the shared region happen to change, which can be determined by the sharing mechanism of a conference system. Since the process of sharing in real time is commonly known, the description thereof will be omitted herein.

For example, when the sharing host returns to the entire screen to display the conference contents after sending the urgent email, the client of the sharing host can receive the instruction for canceling sharing maintenance input by the sharing host through the user operation interface. Thus, after receiving the sharing maintenance canceling instruction, the client of the sharing host acquires the conference contents in the shared region in real time, and sends to the conference server the conference contents acquired in real time as shared contents, and then the conference server distributes the received shared contents to other clients.

Furthermore, in order to reduce the load of the client of the sharing host, the method may further comprise that the client of the sharing host deletes the stored contents according to the received instruction for canceling sharing maintenance.

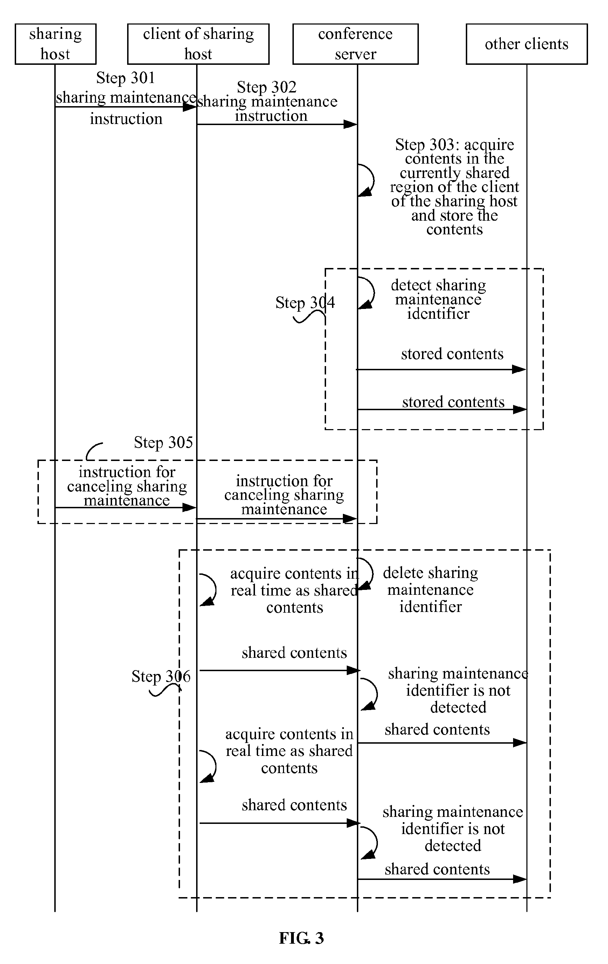

FIG. 3 is a flowchart of a method for desktop sharing processing method according to still another embodiment of the present invention. In this embodiment, the technical solution of the embodiment is described in detail by taking the device for desktop sharing processing as a conference server for example. As shown in FIG. 3, the method of this embodiment comprises the following steps.

Step 301, a client of a sharing host receives a sharing maintenance instruction input by the sharing host.

Specifically, the client of the sharing host can provide a user operation interface for a user, and achieve the operation for interacting with the user through the user operation interface. In this embodiment, the client of the sharing host can receive a sharing maintenance instruction input by a sharing host through the user operation interface, wherein the user operation interface can be displayed to the user in a form of button, etc.

Step 302, a conference server receives the sharing maintenance instruction sent by the client of the sharing host, and the contents in a currently shared region of the client of the sharing host are carried in the sharing maintenance instruction.

Specifically, after receiving the sharing maintenance instruction input by a user, the client of the sharing host acquires the contents in the currently shared region, and sends the contents to the conference server by carrying it in the sharing maintenance instruction. In this embodiment, the client of the sharing host can package the sharing maintenance instruction into a protocol message supported by the conference server when the sharing maintenance instruction is to be sent to the conference server.

Step 303, the conference server acquires the contents in the currently shared region of the client of the sharing host that are carried in the sharing maintenance instruction according to the sharing maintenance instruction, and then stores the contents.

Specifically, during the sharing process of the conference, the conference server will wait for receiving the shared contents sent by the client of the sharing host, and distributes the shared contents received to the clients of other participants.

After receiving the sharing maintenance instruction, the conference server stores the contents in the currently shared region of the client of the sharing host that are carried in the sharing maintenance instruction. The stored contents is provided to other clients as shared contents during the following processes for sharing (refer to step 304 for details). In this embodiment, the term "currently" used herein refers to the moment when the client of the sharing host receives the sharing maintenance instruction.

Further, when storing the contents sent from the client of the sharing host, the conference server can set a sharing maintenance identifier for the contents. During the following processes for sharing, the conference server can determine the sharing mode (e.g., sharing instant contents or stored contents) through detecting this sharing maintenance identifier.

Step 304, when it is necessary to send the shared contents, the conference server sends to the clients of other participants the stored contents as shared contents.

Specifically, when it is necessary to send the shared contents, the conference server detects the sharing maintenance identifier. If the sharing maintenance identifier is detected, there no need to wait for receiving the shared contents sent from the client of the sharing host any longer, but the stored contents will be sent to the clients of other participants according to the detected sharing maintenance identifier (i.e., taking the stored contents as shared contents). In this embodiment, the mechanism for sending the shared contents shown in FIG. 3 is to send at a predetermined time interval, i.e., the conference server sends the stored contents to the clients of other participants at a predetermined time interval during the following processes for sharing.

In this embodiment, during the process for sharing a conference, the shared contents of the conference can be displayed in real time on the screen of the client of the sharing host. Specifically, the shared contents can be displayed on an entire screen of the client of the sharing host, displayed on a specified application window on the screen of the client of the sharing host, or displayed in a pre-bounded region on the screen of the client of the sharing host. The client of the sharing host can collect the shared contents displayed on the screen of the client of the sharing host at a predetermined time interval, and send the shared contents to the clients of other participants through the conference server. In this embodiment, the client of the sharing host can be embodied as a hardware terminal, e.g., a computer or a conference terminal; the client of the sharing host can also be embodied as a software terminal, e.g., a conference client installed on a computer.

When it is necessary to perform other operations on the client of the sharing host without interrupting the participants watching the shared contents, the sharing host can receive the sharing maintenance instruction input by the sharing host through the user operation interface. The sharing host carries the acquired contents in the shared region for current conference in the sharing maintenance instruction, and sends it to the conference server. The conference server receives the sharing instruction, acquires the contents in the current shared region, and the stores the contents. Besides, when storing the contents, the conference server sets the sharing maintenance identifier for the contents. The sharing maintenance identifier is corresponding to the contents, such that if the sharing maintenance identifier is detected, the conference server will not wait for the contents sent from the client of the sharing host any longer, and considers the stored contents as shared contents which will be sent to other clients at a predetermined time interval. Thus, the influence on the conference sharing caused by other operations irrelevant to the conference can be reduced.

Note that after receiving the sharing maintenance instruction and acquiring the contents in the shared region of current conference, the client of the sharing host stops acquiring the contents in the shared region in real time.

In this embodiment, the conference server acquires the contents in the currently shared region included in the sharing maintenance instruction through receiving the sharing maintenance instruction sent by the client of the sharing host, and then stores the contents. Meanwhile, when storing the contents, the sharing maintenance identifier will be set for the contents. When the sharing maintenance identifier is detected, the conference server distributes to other clients the stored contents as shared contents according to the detected sharing maintenance identifier.

Further, while the sharing host is not need to conduct other operations irrelevant to the conference, it will cancel the sharing maintenance instruction. Thus, the embodiment shown in FIG. 3 further comprises the following steps.

Step 305, the conference server receives an instruction for canceling sharing maintenance.

Similarly, the conference server can also receive the instruction for canceling sharing maintenance from the client of the sharing host, wherein the instruction for canceling sharing maintenance sent from the client of the sharing host can be carried out according to the operation of the user, of which the specific implementation is similar to that of receiving the sharing maintenance instruction, and the description thereof will be omitted herein.

Step 306, after receiving the instruction for canceling sharing maintenance, the conference server deletes the sharing maintenance identifier, acquires the contents sent from the client of the sharing host in real time, and provides the contents acquired in real time to the clients of other participants as shared contents.

In this embodiment, the term "real time" used herein may a predetermined time interval or may be the time when the client of the sharing host sends the shared contents, which can be determined by the sharing mechanism of the conference system. Since the process of sharing in real time is commonly known, the description thereof will be omitted herein.

In this embodiment, when the sharing host returns to the contents displayed in the shared region after performing other processing, the client of the sharing host can receive the instruction for canceling sharing maintenance input by the sharing host through the user operation interface. Thus, after receiving the instruction for canceling sharing maintenance, the client of the sharing host acquires the contents of the conference in the shared region in real time, and sends to the conference server the conference contents acquired in real time as shared contents as well as the sharing maintenance canceling instruction, and then the conference server deletes the sharing maintenance identifier according to the instruction for canceling sharing maintenance. Therefore, when the sharing maintenance identifier is not detected, the conference server will distribute the received shared contents to other clients.

Furthermore, in another embodiment of the present invention, in order to reduce the load of the conference server, the method further comprises deleting the stored contents according to the instruction for canceling sharing maintenance.

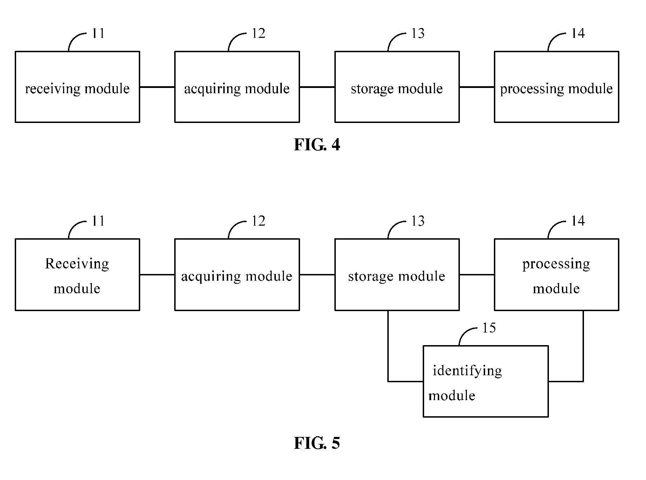

FIG. 4 is a structural diagram of a device for desktop sharing processing according to one embodiment of the present invention. As shown in FIG. 4, the device for desktop sharing processing in this embodiment comprises a receiving module 11, an acquiring module 12, a storage module 13 and a processing module 14. In this embodiment, the receiving module 11 is configured to receive a sharing maintenance instruction; the acquiring module 12 is configured to acquire contents in a currently shared region according to the sharing maintenance instruction; the storage module 13 is configured to store the contents acquired by the acquiring module 12; the processing module 14 is configured to provide the contents stored in the storage module 13 to other clients as shared contents.

The device for desktop sharing processing in this embodiment can be configured to implement the technical solution of the method embodiment as shown in FIG. 1, and their implementation principles are similar, thus the description thereof will be omitted herein.

In this embodiment, it is achieved that during the process for conference sharing, a sharing host can provide shared contents to the participants constantly without being affected by other operations irrelevant to the conference, through receiving the sharing maintenance instruction, acquiring contents in the currently shared region according to the sharing maintenance instruction, then storing the contents, and finally providing the contents stored to other clients as shared contents.

The sharing host can further cancel the sharing maintenance operation when it is not necessary to conduct other operations irrelevant to the conference. Specifically, the receiving module 11 can also be configured to receive an instruction for canceling sharing maintenance. The acquiring module 12 is also configured to acquire contents in the shared region in real time after the receiving module 11 receives the instruction for canceling sharing maintenance. The processing module 14 is also configured to provide the contents acquired by the acquiring module 12 in real time to other clients as shared contents after the receiving module 11 receives the instruction for canceling sharing maintenance.

In addition, for saving space for storage, the storage module 13 can also be configured to delete the contents stored after the receiving module 11 receives the instruction for canceling sharing maintenance.

The desktop sharing processing device in this embodiment of the present invention may be a client of a sharing host or a conference server. The schemes realized at the client of the sharing host and the conference server will be further illustrated respectively below.

In the embodiment that the device for desktop sharing processing is the client of the sharing host, on the basis of the embodiment shown by FIG. 4, the receiving module 11 can specifically be configured to receive the sharing maintenance instruction input by the sharing host through an operation interface. The processing module 14 can specifically be configured to send the contents stored in the storage module 13 to a conference server at a predetermined time interval, and then the conference server distributes the stored contents to other clients.

The device for desktop sharing processing in this embodiment can also be configured to implement the technical solution of the method embodiment as shown in FIG. 2, and their implementation principles are similar, the description thereof will be omitted herein.

The modules of the device for desktop sharing processing can operate in a processor of a terminal where the client of the sharing host lies.

FIG. 5 is a structural diagram of another device for desktop sharing processing according to one embodiment of the present invention. In this embodiment, the device for desktop sharing processing is a conference server. As shown in FIG. 5, in this embodiment, on the basis of FIG. 4, the receiving module 11 is specifically configured to receive the sharing maintenance instruction from the client of the sharing host, and contents in the currently shared region of the client of the sharing host is carried in the sharing maintenance instruction.

Moreover, the device for desktop sharing processing further comprises an identifying module 15 for setting a sharing maintenance identifier for the contents stored in the storage module 13, and the processing module 14 is specifically configured to detect the sharing maintenance identifier and sending the contents stored in the storage module 13 to other clients at a predetermined time interval according to the detected sharing maintenance identifier.

The desktop sharing processing device in this embodiment can be configured to implement the technical solution of the method embodiment shown in FIG. 3, and their implementation principles are similar, the description thereof will be omitted herein.

The modules of the device for desktop sharing processing described above can operate in a processor of the conference server.

It is to be understood by those skills in the art that all or parts of the steps of the methods in the embodiments mentioned above can be accomplished in corresponding hardware in a manner of instructing by programs. The program can be stored in a readable storage medium of a computer, and the embodiments including the methods above will be performed when the program is performed. The storage medium may comprise various medium for storing program codes, such as ROM, RAM, disk or Compact Disc and the like.

Please note that the embodiments of the invention are only used to illustrate, but not to limit to, the technical solutions of the present application. It will be understood by those of ordinary skill in the art that various changes in forms of implementation and the range for application without departing from the scope of the invention, while detailed description is made to the present application by referring to the embodiments above.

## Claims

1. A method for desktop sharing processing, **characterized in that** the method comprising:
receiving a sharing maintenance instruction;
according to said sharing maintenance instruction, acquiring contents in a currently shared region and storing said contents, then providing the stored contents to other clients as shared contents.

2. The method for desktop sharing processing of claim 1, **characterized in that** the method further comprising:
receiving an instruction for canceling sharing maintenance;
after receiving said instruction for canceling sharing maintenance, acquiring contents in the shared region in real time, and providing the contents acquired in real time to other clients as shared contents.

3. The method for desktop sharing processing of claim 2, **characterized in that** the method further comprising:
deleting said stored contents according to the received instruction for canceling sharing maintenance.

4. The method for desktop sharing processing of any of claims 1-3, **characterized in that** the step of receiving the sharing maintenance instruction comprising:
receiving a sharing maintenance instruction input via a sharing host by a client of the sharing host through a user operation interface.

5. The method for desktop sharing processing of claim 4, **characterized in that** the step of providing the contents acquired in real time to other clients as shared contents comprising:
sending said stored contents to a conference server at a predetermined time interval, and distributing said shared contents to other clients through said conference server.

6. The method for desktop sharing processing of any of claims 1-3, **characterized in that** the step of receiving the sharing maintenance instruction comprising:
receiving a sharing maintenance instruction sent from a client of a sharing host by a conference server, and the contents in the currently shared region of said client of the sharing host are carried in said sharing maintenance instruction.

7. The method for desktop sharing processing of claim 6, **characterized in that** the method further comprising:
setting a sharing maintenance identifier for said contents when said contents are being stored;
the step of providing the contents acquired in real time to other clients as shared contents comprising:
detecting said sharing maintenance identifier, taking said stored contents as shared contents according to detected sharing maintenance identifier, and sending said shared contents to other clients at a predetermined time interval.

8. A device for desktop sharing processing, **characterized in that** the device comprising:
a receiving module, configured to receive a sharing maintenance instruction;
an acquiring module, configured to acquire contents in a currently shared region according to said sharing maintenance instruction;
a storage module, configured to store contents acquired by said acquiring module;
a processing module, configured to provide the contents stored in said storage module to other clients as shared contents.

9. The device for desktop sharing processing of claim 8, **characterized in that** said receiving module is further configured to receive an instruction for canceling sharing maintenance;
said acquiring module is further configured to acquire contents in the shared region in real time after said receiving module receives said sharing maintenance canceling instruction;
said processing module is further configured to provide the contents acquired by said acquiring module in real time to other clients as shared contents after said receiving module receives said instruction for canceling sharing maintenance.

10. The device for desktop sharing processing of claim 9, **characterized in that** said storage module is further configured to delete said stored contents after said receiving module receives said instruction for canceling sharing maintenance.

11. The device for desktop sharing processing of any of claims 8-10, **characterized in that** said receiving module is configured to receive a sharing maintenance instruction input by a sharing host through a user operation interface.

12. The device for desktop sharing processing of claim 11, **characterized in that** said processing module is configured to send the contents stored in said storage module to a conference server at a predetermined time interval, and to distribute said stored contents to other clients through said conference server.

13. The device for desktop sharing processing of any of claims 8-10, **characterized in that** said receiving module is configured to receive said sharing maintenance instruction from a client of the sharing host, and the contents in the currently shared region of said client of the sharing host are carried in said sharing maintenance instruction.

14. The device for desktop sharing processing of claim 13, **characterized in that** the device further comprising:
an identifying module, configured to set a sharing maintenance identifier for contents stored in said storage module;
said processing module is configured to detect said sharing maintenance identifier, and to send contents stored in said storage module to other clients at a predetermined time interval according to the detected sharing maintenance identifier.
